# FASCICULE DE BREVET EUROPEEN

(11) **EP 1 703 853 B1**
(45) Date de publication et mention de la délivrance du brevet: **25.03.2009**
(21) Numéro de dépôt: 04820958.9
(22) Date de dépôt: 29.11.2004
(51) Int. Cl.: A61C 8/00

(54) **IMPLANT DENTAIRE**
DENTALIMPLANTAT
DENTAL IMPLANT

(30) Priorité: 10.12.2003 FR 0351018
(43) Date de publication de la demande: 27.09.2006
(73) Titulaire: Scortecci, Gérard, 06000 Nice (FR)
(72) Inventeur: Scortecci, Gérard, 06000 Nice (FR)
(74) Mandataire: Decobert, Jean-Pascal
(86) Numéro de dépôt international: PCT/EP2004/053159
(87) Numéro de publication internationale: WO 2005/065570

(56) Documents cités:
- WO-A-01/93775
- WO-A-02/07633
- CH-A5- 692 898
- DE-U- 9 413 963
- DE-U- 20 304 871
- US-A1- 2003 003 419

## Description

La présente invention concerne un implant dentaire pour la mise en place d'un ensemble prothétique, en particulier pour des applications humaines.

*On connaît déjà des systèmes implantables à insertion verticale comportant un fut de forme cylindrique ou cylindroconique avec une large portion du fut encastrée dans l'os de la mâchoire et une partie supérieure comprenant des moyens de connexion pour la liaison à un ensemble prothétique. L'ensemble prothétique comprend généralement une partie d'interface pour la solidarisation d'une ou plusieurs prosthèses dentaire.*

*On connaît également des dispositifs implantables à insertion latérales mis en place après une ostéotomie latérales et comprenant une portion de base orientée sensiblement perpendiculairement à une portion de tige se terminant par des moyens de connexion d'un ensemble prothétique comme précédemment. Le document* FR-A-2 596 273 *du demandeur s'inscrit dans ce cadre. Les implantes à insertion latérale présentant des avantages conséquents en termes de résistance mécanique.*

*Le document* US-A1-2003/0003419 *montre un implant dentaire présentant une partie de fût et une base pour l'insertion latérale. La base présente une partie repliable de façon extra-osseuse pour améliorer le transfert de charge entre l'implant et la mâchoire.*

*La reprise d'effort n'est cependant pas parfaite dans ce type d'implant.*

Le demandeur a cependant constaté que l'on pouvait encore améliorer les caractéristiques des implants, en particulier pour procurer un meilleur ancrage, et ce même pour des patients présentant des conditions d'implantation délicates.

Un des avantages de l'implant ici proposé est qu'il permet de franchir sans risque tous les obstacl anatomiques maxillo-mandibulaires. Par exemple, les patients autrefois laissés pour compte pour une invalidité buccale irréversible pourront bénéficier de la présente invention, et ce tout en augmentant la facilité et la rapidité de mise en oeuvre de ces implants, ce qui réduit considérablement les coûts d'hospitalisation en rendant ambulatoire cette chirurgie. A titre d'exemple, dans le domaine des cancers de la face et des maxillaires, un patient ayant subi des traitements lourds ne peut généralement plus s'alimenter faute de dents. La présente invention apporte une solution à ce problème.

D'une façon générale, la présente invention permet un ancrage dans l'os basal résiduel quelles que soient les difficultés rencontrées par le chirurgien. Elle permet d'éviter le recours aux chirurgies lourdes, longues et invasives.

Selon l'invention, une immobilité parfaite est réalisée entre l'implant (y compris les portions repliables) et la mâchoire ce qui évite jeu de fonctionnement et assure une excellente transmission et répartition des efforts. Pour y parvenir, l'invention a vaincu un préjugé tendant à penser que la reprise d'effort devait être concentrée au niveau du pied du tronc de l'implant, dans l'os. Au contraire, l'invention réalise en complément une reprise d'effort par l'extérieur avec des moyens de fixation tels des vis.

Un autre avantage de l'invention est que l'implant peut être mis en charge immédiatement (pose du dispositif prothétique). Il faut souligner que l'implant selon l'invention réalise un ancrage endo osseux dans la partie la plus dense des os de la mâchoire et de la face. Elle permet aussi une contention macrogéométrique immédiate du secteur anatomique considéré.

De par ces avantages mécaniques, on réalise un pôle prothétique d'une fiabilité et d'une esthétique jamais égalées pour la fixation de la ou des dents artificielles.

On notera que le type d'implantation de l'invention assure une surface d'appui équivalente à plusieurs cylindres de diamètre 4 mm dans le domaine de l'insertion verticale.

Compte tenu de ces propriétés, l'invention ne nécessite qu'une très faible hauteur d'os pour son ancrage endo osseux (les recherches de l'inventeur montrent que 2 mm suffisent).

L'invention permet d'utiliser les éléments de CFAO (Conception et Fabrication Assistées par Ordinateur) pour une fabrication de prothèse immédiate ainsi que pour la fabrication de guides chirurgicaux avant la pose d'implants permettant la mise en place exacte et programmée des implants selon l'invention.

D'autres buts et avantages apparaîtront au cours de la description qui suit d'un mode préféré de réalisation de l'invention.

La présente invention concerne un implant dentaire tel que décrit dans la revendication 1.

Suivant des modes de réalisation préférés, cet implant est tel que :
- la partie d'extension est intégralement malléable,
- la zone malléable présente un rétrécissement en largeur relativement à la portion latérale,
- les moyens de fixation sont au moins une vis dont la tête s'applique sur la bordure de la découpe centrale,
- il comporte une partie d'extension additionnelle reliée à la portion latérale par une zone malléable additionnelle.
- la partie d'extension additionnelle comporte une protubérance au niveau de son extrémité distale dans laquelle est formé un trou d'insertion d'un vis.
- la partie d'extension additionnelle comporte une découpe centrale.

Les dessins ci-joints sont donnés à titre d'exemples et ne sont pas limitatifs de l'invention. Ils représentent seulement un mode de réalisation de l'invention et permettront de la comprendre aisément,

La figure 1 est une vue de dessus d'un implant dans un premier mode de réalisation et la figure 2 en est une vue latérale, la figure 3 en étant une vue de dessous.

La figure 4 est une vue en coupe selon les lignes AA de la figure 2.

Les figures 5 et 6 illustrent respectivement en vue de dessus et en vue latérale un second mode de réalisation d'un implant dans lequel une seule portion latérale est réalisée.

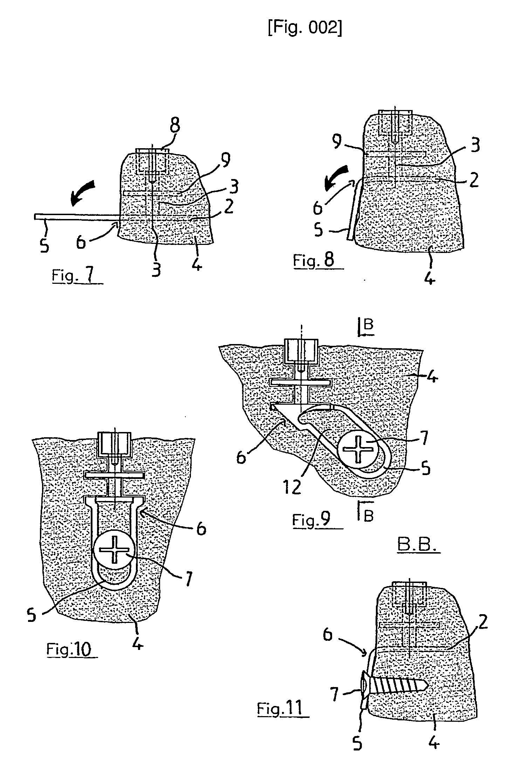

Les figures 7 à 11 montrent des exemples d'implantation d'un implant dans l'os d'une mâchoire et sa fixation.

Les figures 12 et 13 montrent un autre mode de réalisation d'un implant de l'invention respectivement en vue de dessus et en vue latérale.

Les figures 14 et 15 montrent un mode de réalisation de l'invention avec deux parties d'extension.

Les figures 16 et 17 en illustrent une variante de l'invention avec une fixation différente.

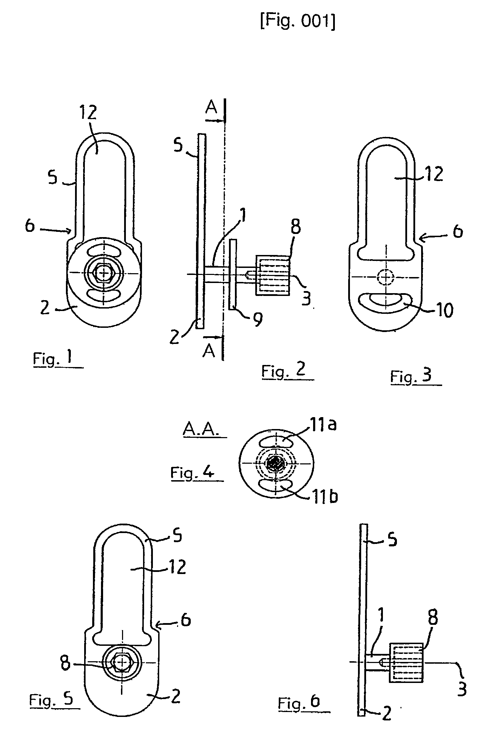

En référence aux figures, et notamment aux figures 2, 6 et 13, on constate que l'implant comporte un tronc 1 donnant l'orientation axiale de l'implant suivant l'axe 3. A son extrémité supérieure, le tronc 1 présente des moyens de connexion 8 pour la coopération avec un dispositif prothétique non représenté. A titre d'exemple, les moyens de connexion 8 pourront être du type décrit dans la demande de brevet FR-A-2 806 291 du même demandeur et, en particulier, les moyens de connexion 8 pourront comprendre une partie centrale saillante avec un profil polygonal et une ceinture périphérique dont la paroi intérieure est de section circulaire, comme cela apparaît également à la figure 5.

Outre le tronc 1, l'implant comporte une portion latérale 2 orientée dans un plan incliné par rapport à l'axe 3 du tronc 1 et préférentiellement perpendiculaire à celui-ci, comme dans le cas représenté.

L'ensemble ainsi formé est apte à être enfoui dans l'os d'une mâchoire par insertion latérale après une ostéotomie latérale sous une abondante irrigation à l'aide d'un disque ou d'une scie oscillante permettant de préparer le lit endo osseux de l'implant.

En outre, l'implant comporte au moins une partie d'extension 5. Elle est reliée à la portion latérale 2 par une zone malléable 6 qui présente, par exemple, un rétrécissement en largeur relativement à la portion latérale 2.

Grâce à ce système, la partie d'extension 5 peut être rabattue sur une zone extra osseuse de la mâchoire pour y être fixée par des moyens de fixation 7 ici représentés sous forme de vis mais qui peuvent aussi être constitués par des agrafes. Le terme malléable s'entend donc d'une déformation préférentiellement plastique engendrée par le praticien et donnant à l'implant sa configuration définitive.

Avantageusement, c'est l'ensemble de la partie d'extension 5 qui est malléable, par exemple par un choix de matière et de dimensions appropriées. En particulier, on peut constituer l'ensemble de l'implant de façon monobloc en titane commercialement pur et en réalisant la partie d'extension avec une découpe centrale 12 préservant une bordure de faible largeur pour la partie d'extension 5, ce qui assure une bonne déformabilité plastique.

D'autres configurations réalisant la déformation sont également possibles, notamment par le biais d'une articulation.

Pour le cas représenté aux figures 1 à 6, la découpe centrale 12 préserve un emplacement pour la mise en place d'un moyen de fixation sous forme de vis dont la tête est apte à s'appliquer sur la bordure de la découpe 12. On peut également utiliser plusieurs vis à cet effet.

A titre avantageux, cette disposition permet de réaliser un système cinématique de glissière entre la ou les vis et la partie d'extension 5.

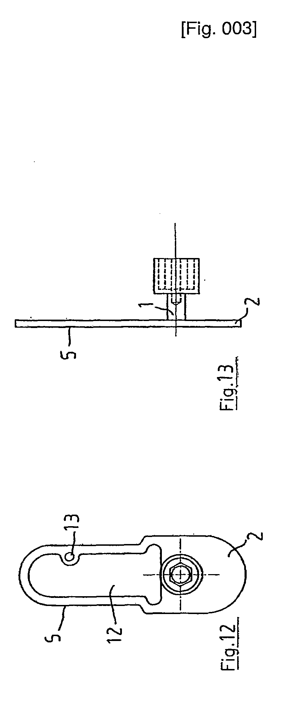

Dans le cas représenté aux figures 12 et 13, la partie d'extension 5 comporte au moins un trou 13 apte à l'insertion d'une vis pour la fixation de la partie d'extension 5 sur l'os maxillaire ou mandibulaire.

Dans le mode de réalisation illustré aux figures 1 à 4, outre la portion latérale basale 2, l'implant comporte une portion latérale secondaire 9, ici en superposition par rapport à la portion 2. On augmente ainsi d'autant la surface d'appui de l'implant dans l'os.

La mise en place de l'implant peut s'effectuer de la façon suivante : comme indiqué précédemment, on réalise une ostéotomie latérale pour préparer le lit endo osseux de l'implant cylindrique et de la portion latérale.

Ensuite, l'implant est impacté latéralement dans sa loge endo osseuse à l'aide d'un impacteur manuel ou automatique. La partie d'extension 5 est alors modelée en fonction du relief osseux à l'aide d'un maillet manuel ou automatique monté sur contre angle. Des moyens de fixation 7, par exemple sous forme d'une ou plusieurs vis d'ostéosynthèse, peuvent alors être utilisés chaque fois que cela s'avère nécessaire. Le vissage est facilité par le fait que l'implant est déjà parfaitement fixé dans sa loge endo osseuse et n'a pas besoin d'être tenu lors du vissage des vis d'ostéosynthèse.

Pour faciliter l'intégration de l'implant après l'intervention, ce dernier peut comporter diverses lumières 10 et 11a, 11b dans les portions latérales 2, 9.

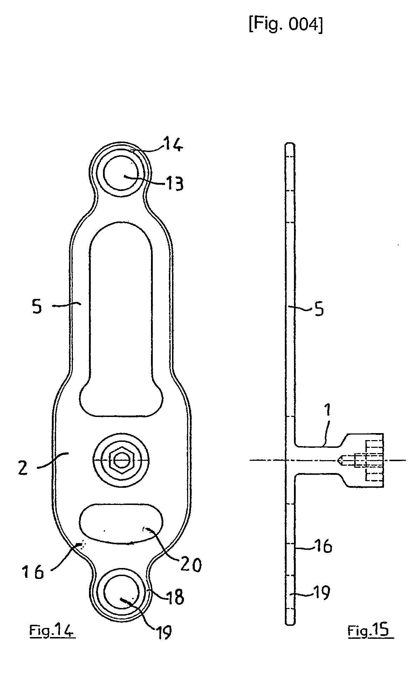

Les figures 14 et 15 montrent un implant avec une partie d'extension 5 terminée par une protubérance 14 recevant un trou 13 de vissage. La jonction de la protubérance 14 avec le reste de la partie 5 est malléable par le biais d'un rétrécissement de sorte à ajuster encore plus précisément la fixation.

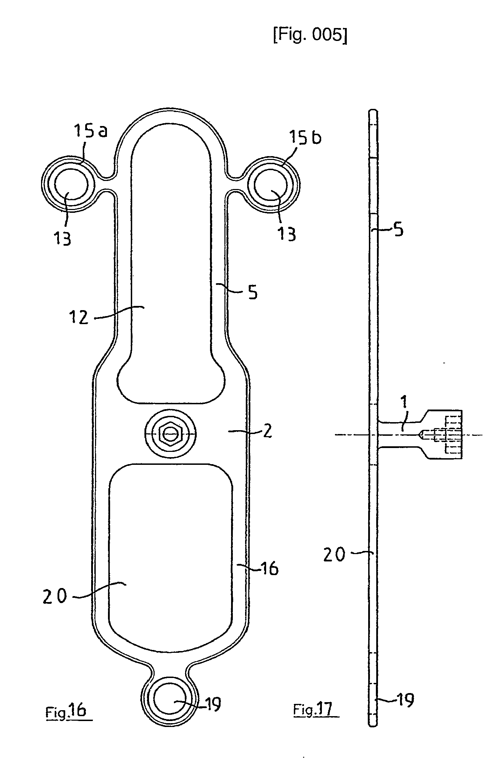

Suivant les figures 16 et 17, deux protubérances (15a, 15b) sont formées, peu en dessous de l'extrémité distale de la partie 5 et de part et d'autre de celle-ci. Elles reçoivent chacune un trou 13 pour une fixation par deux points avec deux vis. Là encore, les protubérances 15a, 15b peuvent être ajustées en position par la malléabilité de l'ensemble.

Tant dans les figures 14 et 15 que les figures 16 et 17, une partie d'extension additionnelle 16 est présente, à l'opposé de la partie 5 par rapport à l'axe du tronc 1. Sa configuration peut être similaire à celle de la partie 5 notamment par la présence d'une découpe 20 et de moyens de fixation. Une protubérance 18 (ou plusieurs) est prévue à cet effet.
Suivant les cas d'implantation, la partie 16 est plus courte ou sensiblement de même longueur que la partie 5.
A titre uniquement indicatif, la longueur de la partie d'extension 5 peut être de l'ordre de 10 à 20 mm. Si présente, la partie additionnelle 16 peut avoir une longueur de 7 à 20 mm. Les parties d'extension 5, 16 prolongent la partie latérale 2 dont la longueur peut être de l'ordre de 3 à 8 mm. Dans le cas de la figure 14 et de la figure 16, la découpe centrale 12 ménage une bande de matière à sa périphérie d'une largeur d'environ 1,5 à 2,5 mm.

## Revendications

1. Implant dentaire pour la mise en place d'un ensemble prothétique, comportant de façon monobloc un tronc (1) et une portion latérale (2) orientée dans un plan incliné par rapport à l'axe (3) du tronc (1), apte à être enfoui dans l'os (4) d'une mâchoire par insertion latérale, comportant au moins une partie d'extension (5) reliée à la portion latérale (2) par une zone malléable (6) et ladite partie d'extension (5) comportant une découpe centrale (12) **caractérisé par le fait**
- **que** la partie d'extension (5) est dotée de moyens de fixation (7) sous forme de vis pour être applicable et solidarisable à l'os (4) par sa surface extérieure,
- **que** la partie d'extension (5) comporte une protubérance (14) au niveau de son extrémité distale, dans laquelle est formé un trou (13) d'insertion d'une vis ou deux protubérances latérales (15a, 15b) formées symétriquement relativement à la direction longitudinale de la partie d'extension, protubérances (15a, 15b) dans chacune desquelles est formé un trou (13) d'insertion d'une vis, que les protubérances latérales (15a, 15b) étant situées dans la zone d'extrémité distale de la partie d'extension (5);
- **que** la jonction entre chaque protubérance (14, 15a, 15b) et le reste de la partie d'extension (5) est malléable par le biais d'un rétrécissement.

2. Implant selon la revendication 1 **caractérisé par le fait que** la partie d'extension (5) est intégralement malléable.

3. Implant selon la revendication 1 ou la revendication 2 **caractérisé par le fait**
**que** la zone malléable (6) présente un rétrécissement en largeur relativement à la portion latérale (2).

4. Implant, selon l'une quelconque des revendications 1 à 3, **caractérisé par le fait**
**qu'**il comporte une partie d'extension additionnelle (16) reliée à la portion latérale (2) par une zone malléable additionnelle (17).

5. Implant, selon la revendication 4, **caractérisé par le fait**
**que** la partie d'extension additionnelle (16) comporte une protubérance (18) au niveau de son extrémité distale dans laquelle est formé un trou (19) d'insertion d'une vis.

6. Implant, selon la revendication 4 ou 5, **caractérisé par le fait**
**que** la partie d'extension additionnelle (16) comporte une découpe centrale (20).

7. Implant selon l'une des revendications 1 à 6 dans lequel la découpe centrale (12) ménage une bande de matière à sa périphérie d'une largeur comprise entre 1,5 millimètres et 2,5 millimètres.

## Claims

1. Dental implant for installing a prosthetic assembly, formed in one part of a stem (1) and a lateral part (2) oriented in an inclined plane relative to axis (3) of stem (1), capable of being buried in bone (4) of a jaw by lateral insertion, comprising at least an extension part (5) connected to lateral part (2) by a malleable zone (6) and said extension part (5) comprising a central cut out (12) **characterised in that**
- extension part (5) is equipped with fixing means (7) in the form of screw to be applied and joined to bone (4) through its outer surface,
- extension part (5) has a protuberance (14) at its distal end, in which is formed a hole (13) for inserting a screw or two lateral protuberances (15a, 15b) formed symmetrically relative to the longitudinal direction of the extension part, protuberances (15a, 15b) in each one of which is formed a hole (13) for inserting a screw, that lateral protuberances (15a, 15b) have been located in the distal end zone of extension part (5);
- the junction between each protuberance (14, 15a, 15b) and the remainder of the extension part (5) is rendered malleable by means of a narrowing.

2. Implant according to claim 1 **characterised in that**
extension part (5) is completely malleable.

3. Implant according to claim 1 or claim 2 **characterised in that**
malleable zone (6) has a narrowing relative to the lateral part (2).

4. Implant, according to any of claims 1 to 3, **characterised in that**
it has an additional extension part (16) connected to lateral part (2) by an additional malleable zone (17).

5. Implant according to claim 4, **characterised in that**
the additional extension part (16) has a protuberance (18) at its distal end in which is formed a hole (19) for inserting a screw.

6. Implant according to claim 4 or 5, **characterised in that**
the additional extension part (16) has a central cutout (20).

7. Implant according to one of claims 1 to 6 in which central cutout (12) accommodates a strip of material at its edge, said strip being between 1.5 millimetres and 2.5 millimetres wide.

## Patentansprüche

1. Implantat für die Zahnmedizin zum Einsatz einer Zahnprothese, bestehend aus einem monolithischen Teil mit einem Schaft (1) sowie einem seitlichen Ansatz (2), der in bezug auf die Achse (3) des Schafts (1) geneigt ist und in den Knochen (4) eines Kiefers von der Seite her eingesetzt werden kann, mit mindestens einer Verlängerung (5), die mit dem seitlichen Ansatz (2) durch eine plastisch verformbare Zone (6) verbunden ist, wobei die genannte Verlängerung (5) in ihrer Mitte einen Ausschnitt (12) besitzt, **gekennzeichnet dadurch,**
- **dass** die Verlängerung (5) Befestigungsvorrichtungen (7) in Schraubenform besitzt, um an der Außenseite des Knochens (4) angebracht und befestigt werden zu können;
- **dass** die Verlängerung (5) an ihrem distalen Ende eine Ausbauchung (14) mit einem Loch (13) zur Aufnahme einer Schraube aufweist oder auch zwei seitliche Ausbauchungen (15a, 15b) mit je einem Loch (13) zur Aufnahme einer Schraube und dass die seitlichen Ausbauchungen (15a, 15b) im Bereich des distalen Endes der Verlängerung (5) liegen;
- **dass** die Verbindung zwischen jeder Ausbauchung (14, 15a, 15b) mit der Verlängerung (5) aufgrund einer Verengung plastisch verformbar sind.

2. Zahnimplantat gemäß Anspruch 1, **gekennzeichnet dadurch, dass** die Verlängerung (5) insgesamt plastisch verformbar ist.

3. Zahnimplantat gemäß Anspruch 1 oder Anspruch 2, **gekennzeichnet dadurch, dass** die plastisch verformbare Zone (6) in bezug auf den seitlichen Ansatz (2) eine Verengung aufweist.

4. Zahnimplantat gemäß einem der vorstehenden Ansprüche 1 bis 3, **gekennzeichnet dadurch, dass** sie eine zusätzliche Verlängerung (16) besitzt, die mit dem seitlichen Ansatz (2) durch eine zusätzliche, plastisch verformbare Zone (17) verbunden ist.

5. Zahnimplantat gemäß Anspruch 4, **gekennzeichnet dadurch, dass** die zusätzliche Verlängerung (16) eine Ausbauchung (18) an ihrem distalen Ende aufweist, die ein Loch (19) zur Aufnahme einer Schraube besitzt.

6. Zahnimplantat gemäß Anspruch 4 oder 5, **gekennzeichnet dadurch, dass** die zusätzliche Verlängerung (16) in der Mitte einen Ausschnitt (20) besitzt.

7. Zahnimplantat gemäß einem der Ansprüche 1 bis 6, bei dem ein materielles Band mit einer Breite zwischen 1,5 mm und 2,5 mm am Umfang des mittigen Ausschnittes (12) angeordnet ist.
